# EUROPÄISCHE PATENTANMELDUNG

(11) **EP 3 616 818 A1**
(43) Veröffentlichungstag der Anmeldung: **04.03.2020**
(21) Anmeldenummer: 18191288.2
(22) Anmeldetag: 28.08.2018
(51) Int. Cl.: B23K 1/00, B23K 1/08, B23K 1/20, B23K 3/06, B23K 101/38

(54) **VORRICHTUNG UND VERFAHREN ZUM VERZINNEN VON LEITERENDEN**

(71) Anmelder: Schleuniger Holding AG, 3608 Thun (CH)
(72) Erfinder: ZBINDEN, Michael, 3600 Thun (CH); HALDIMANN, Stefan, 3014 Bern (CH)
(74) Vertreter: Patentbüro Paul Rosenich AG

(57) **Zusammenfassung**

Die Erfindung betriff eine Vorrichtung (100) zum Verzinnen von Leiterenden. Die Vorrichtung umfasst einen Beh±lter (10) zum Bereitstellen eines Zinnbades (11) und einen FØrderbeh±lter (20) zur Aufnahme eines Zinnvorrates (24). Der FØrderbeh±lter (20) ist beweglich angeordnet, derart, dass er in zumindest eine erste Position innerhalb des Beh±lters (10) und in eine zweite, zu der ersten Position unterschiedliche, Position bringbar ist.

## Beschreibung

Die vorliegende Erfindung betrifft eine Vorrichtung und ein Verfahren zum Verzinnen von Leiterenden.

Beim Verzinnen von Leiterenden handelt es sich um einen Vorgang, bei dem typischerweise flüssiges Zinn auf ein abisoliertes Ende eines Leiters aufgebracht wird. Diese so vorbereiteten Leiterenden werden in weiteren Bearbeitungsschritten beispielsweise an eine Vorrichtung übergeben, die diese so vorbereiteten Leiterenden in einem weiteren Verfahrensschritt beispielsweise mit einer entsprechenden Leiterplatte verlötet.

Im Stand der Technik wird typischerweise zwischen zwei unterschiedlichen Verfahren zum Verzinnen von Leiterenden gewählt. Das erste Verfahren betrifft das vertikale Eintauchen von Leiterenden in ein Zinnbad, das zweite Verfahren betrifft Verfahren, bei denen das Zinn gefördert wird und in einer Art Schwall bereitgestellt wird, in den ein horizontal geförderter Leiter eingetaucht wird.

In Kabelbearbeitungsmaschinen wird der Leiter typischerweise horizontal gefördert. Das heisst, bei Verfahren, bei denen die Leiterenden vertikal in ein Zinnbad eingetaucht werden, muss der Leiter vor dem Eintauchen aus einer horizontalen in eine vertikale Position gebracht werden. Dieser Schritt ist aufwendig und nachteilig.

Um diesen Schritt zu umgehen, wurden im Stand der Technik unterschiedliche Lösungen vorgeschlagen.

Mit der US 2005/0000421 A ist eine derartige Vorrichtung bekannt geworden. Diese Vorrichtung weist eine Pumpe und ein Fördererrohr auf, durch welches Zinn gefördert werden kann. Das Zinn wird im Anschluss in einer Düse bereitgestellt, in welche das zu verzinnende Leiterende getaucht werden kann.

Diese Vorrichtung weist eine Vielzahl einzelner Bauteile auf und ist aufwendig im Unterhalt. Flüssiges Zinn, welches sich innerhalb der Vorrichtung befindet, erstarrt, sobald das Zinnbad nicht mehr beheizt wird. In diesem Zustand lässt sich die Vorrichtung weder bedienen noch warten.

Es ist daher Aufgabe der Erfindung, einen oder mehrere Nachteile des Standes der Technik zu überwinden. Insbesondere soll eine Vorrichtung und ein Verfahren zum Verzinnen von Leiterenden bereitgestellt werden, welches einfach und zuverlässig ist und insbesondere das reproduzierbare Verzinnen von Leiterenden ermöglicht.

Diese Aufgabe wird durch die in den unabhängigen Patentansprüchen definierten Vorrichtungen und Verfahren gelöst. Weitere Ausführungsformen ergeben sich aus den abhängigen Patentansprüchen.

Beim Verzinnen von Leiterenden wird typischerweise nicht reines Zinn verwendet, sondern entsprechende Lotlegierungen. Der Ausdruck Verzinnen wird hier und im Folgenden als Aufbringen einer entsprechenden Lotlegierung verstanden, mit dem Ausdruck Zinn wird hier und im Folgenden auch eine Lotlegierung verstanden.

Eine erfindungsgemässe Vorrichtung zum Verzinnen von Leiterenden umfasst einen Behälter zum Bereitstellen eines Zinnbades und einen Förderbehälter zur Aufnahme eines Zinnvorrates. Der Förderbehälter ist, insbesondere mit einer Haltevorrichtung an der Vorrichtung, beweglich angeordnet, derart, dass er in zumindest eine erste Position innerhalb des Behälters und in eine zweite, zu der ersten Position unterschiedliche, Position bringbar ist.

Der Förderbehälter ermöglicht es, einen Zinnvorrat bereitzustellen, in den ein abisoliertes Leiterende eingetaucht werden kann. Durch die bewegliche Anordnung kann dieser in eine erste Position innerhalb des Behälters bewegt werden und damit in das Zinnbad eingetaucht werden. Somit lässt sich ein Zinnvorrat innerhalb des Förderbehälters erneuern und/oder auffüllen.

Der Förderbehälter ist vorzugsweise mit einer Haltevorrichtung an der Vorrichtung beweglich angeordnet. Dies erlaubt das einfache Bereitstellen und einen kompakten Aufbau einer entsprechenden Vorrichtung.

Die Vorrichtung kann einen Sensor zum Überwachen eines Füllstandes des Zinnbades aufweisen.

Die Überwachung des Füllstandes ermöglicht es, eine Aussage darüber zu treffen, ob sich noch genügend Zinn im Zinnbad befindet und insbesondere sicherzustellen, dass beim Eintauchen des Förderbehälters in das Zinnbad der Zinnvorrat des Förderbehälters wunschgemäss gefüllt wird.

Es kann vorgesehen sein, dass die Vorrichtung eine Zinn-Zuführvorrichtung zum Nachfüllen des Zinnbades aufweist. Die Zinn-Zuführvorrichtung kann insbesondere als eine Zinnspule mit Drahtvorschub ausgebildet sein. Alternativ ist es vorstellbar, dass die Zinn-Zuführvorrichtung als eine Zinn-Pellets-Schüttvorrichtung ausgebildet ist. Diese Zinn-Zuführvorrichtung ist vorzugsweise anhand eines Signals des Sensors zum Überwachen des Füllstandes des Zinnbades aktivierbar.

Bei einer Unterschreitung des Füllstandes des Zinnbades kann die Zinn-Zuführvorrichtung aktiviert werden, sodass der Füllstand des Zinnbades erhöht wird und sich somit immer genügend Zinn im Zinnbad befindet.

Die Ausbildung als Zinnspule mit Drahtvorschub ermöglicht das präzise Auffüllen des Zinnbades. Eine Ausbildung als Zinn-Pellets-Schüttvorrichtung ermöglicht das Anordnen der Zinn-Zuführvorrichtung beabstandet zur Vorrichtung, da das zuzuführende Zinn nicht abgeschmolzen werden muss.

Vorzugsweise ist der Förderbehälter vertikal verschieblich angeordnet.

Eine vertikal verschiebliche Anordnung kann beispielsweise mit einem linearen Aktuator realisiert werden. Der Förderbehälter kann somit auf einfache Weise in die erste und in die zur ersten Position unterschiedliche zweite Position gebracht werden.

Der Förderbehälter kann um eine Drehachse schwenkbar angeordnet sein.

Eine schwenkbare Anordnung ermöglicht ebenfalls das einfache Bereitstellen des Förderbehälters in der ersten und in der zur ersten Position unterschiedlichen zweiten Position.

In einer bevorzugten Ausführungsform weist der Förderbehälter zum Befestigen an der Haltevorrichtung einen Schnellverschluss auf.

Der Förderbehälter kann somit abhängig von dem zu verzinnenden Leiterende, mit anderen Worten, abhängig von dem zu verzinnenden Kabel, entsprechend ausgewählt werden. Die Vorrichtung lässt sich somit leiterspezifisch und/oder Kabelspezifisch aus- und/oder umrüsten.

In einer alternativen Ausführungsform kann der Förderbehälter an einem frei beweglichen Schwenkarm, insbesondere an einem Roboterarm, angeordnet sein.

Dies ermöglicht das freie und unabhängige Bewegen des Förderbehälters in alle Richtungen. So kann beispielsweise je nach Füllstand des Zinnbades eine unterschiedliche Eintauchtiefe gewählt werden, so, dass sichergestellt ist, dass der Zinnvorrat im Förderbehälter gemäss den Anforderungen gefüllt wird. Zudem ist es möglich, den Förderbehälter in eine weitere Position zu verfahren.

Der Förderbehälter kann zur Aufnahme des Zinnvorrates eine Kavität mit einer Einlassöffnung aufweisen. Die Kavität kann sich insbesondere durch den Förderbehälter hindurch erstrecken und eine Auslassöffnung aufweisen. Vorzugsweise weist die Kavität im Bereich der Einlassöffnung einen ersten Querschnitt und im Bereich der Auslassöffnung einen zweiten Querschnitt auf. Dabei kann vorgesehen sein, dass der zweite Querschnitt kleiner ist als der erste Querschnitt.

Eine Kavität mit einer Einlassöffnung ermöglicht das einfache Befüllen des Förderbehälters sowie das einfache Eintauchen eines Leiterendes und das entsprechende Benetzen des Leiterendes mit Zinn, welches als Zinnvorrat in der Kavität ist.

Wenn sich die Kavität durch den Förderbehälter hindurch erstreckt, und entsprechend eine Auslassöffnung aufweist, wird das Befüllen der Kavität weiter vereinfacht.

Typischerweise wird das zu verzinnende Leiterende in einer Fördererrichtung durch die Einlassöffnung in die Kavität hinein bewegt und entsprechend in den Zinnvorrat eingetaucht. Beim Eintauchen in den Zinnvorrat wird ein Teil des Zinnvorrates verdrängt. Bei einer Kavität, die lediglich eine Einlassöffnung aufweist, fliesst das Zinn entgegen der Fördererrichtung in Richtung des Kabels/Leiters aus der Eintrittsöffnung aus der Kavität hinaus.

Sofern die Kavität eine Auslassöffnung aufweist und sich somit durch den Förderbehälter hindurch erstreckt, ist es dem sich im Zinnvorrat befindlichen Zinn ermöglicht, in Fördererrichtung aus der Auslassöffnung aus der Kavität zu fliessen. Ein unabsichtliches Benetzen einer Isolation des Leiters ist damit unwahrscheinlicher.

Wie bereits dargelegt, kann es vorgesehen sein, dass die Kavität im Bereich der Einlassöffnung einen ersten Querschnitt aufweist und im Bereich der Auslassöffnung einen zweiten Querschnitt, wobei der zweite Querschnitt kleiner ist als der erste Querschnitt. Durch einen entsprechend grossen Querschnitt im Bereich der Einlassöffnung ist sichergestellt, dass ein genügend grosser Zinnvorrat innerhalb der Kavität liegt, wobei dieser erste Querschnitt typischerweise abhängig vom zu verzinnenden Kabel gewählt wird. Eine Verengung am zweiten Querschnitt im Bereich der Austrittsöffnung stellt sicher, dass der Zinnvorrat am ungehinderten Ausfliessen gehindert ist. Der zweite, verengte Querschnitt stellt im vorliegenden Fall eine Strömungsblende dar.

Der Förderbehälter kann zur Aufnahme des Zinnvorrates eine Nut aufweisen. Eine Nut ist eine Vertiefung mit länglicher Erstreckung die in einer Oberfläche angeordnet ist. Die Nut kann als abgesetzte Nut ausgebildet sein und somit stirnseitig eine Einlassöffnung aufweisen. Die Nut kann sich insbesondere durch den Förderbehälter hindurch erstrecken und als eine durchlaufende Nut ausgebildet sein. Entsprechend weist sie an ihrer zweiten Stirnseite eine Auslassöffnung auf. Vorzugsweise weist die Nut im Bereich der Einlassöffnung einen ersten Querschnitt und im Bereich der Auslassöffnung einen zweiten Querschnitt auf. Dabei kann vorgesehen sein, dass der zweite Querschnitt kleiner ist als der erste Querschnitt.

Eine Nut ermöglicht das einfache Befüllen des Förderbehälters sowie das einfache Eintauchen eines Leiterendes und das entsprechende Benetzen des Leiterendes mit Zinn, welches als Zinnvorrat in der Nut ist.

Dabei ist es möglich, den Leiter entlang der Längsachse der Nut in diese Einzutauchen. Ein laterales Eintauchen des Leiters in die Nut ist ebenfalls möglich. Dabei ist es vorstellbar, dass beispielsweise der zu verzinnende Leiter an Ort und Stelle gehalten wird, und der Förderbehälter mit der Nut beispielsweise nach oben bewegt wird, so lange, bis sich der Leiter in der Nut befindet und durch den sich in der Nut befindlichen Zinnvorrat benetzt wird.

Alternativ wäre es möglich, den Förderbehälter mit der Nut in einer bestimmten Lage zu halten, und den Leiter in einer Art Parallelverschiebung in die Nut einzutauchen. Der Leiter könnte ebenfalls durch eine Dreh-/oder Schwenkbewegung in die Nut eingetaucht werden.

Die Ausbildung als Nut ermöglicht es, dem, beim Eintauchen des Leiterendes in den Zinnvorrat verdrängte, Zinn auszuweichen. Bei einer Nut, die lediglich eine Einlassöffnung aufweist, fliesst das Zinn zum Teil entgegen der Fördererrichtung aus der Einlassöffnung in Richtung des Kabels/Leiters aus der Nut hinaus. Ein Teil des verdrängten Zinns fliesst, beim Beispiel einer Nut, die in einer horizontalen Oberfläche angeordnet ist, nach oben aus der Nut.

Sofern die Nut eine Auslassöffnung aufweist und sich somit durch den Förderbehälter entlang des Förderbehälters erstreckt, ist es dem sich im Zinnvorrat befindlichen Zinn ermöglicht, in Nutrichtung aus der Nut zu fliessen. Ein unabsichtliches Benetzen einer Isolation des Leiters ist damit unwahrscheinlicher.

Wie bereits dargelegt, kann es vorgesehen sein, dass die Nut, genau wie die vorliegend beschriebene Kavität, im Bereich der Einlassöffnung einen ersten Querschnitt aufweist und im Bereich der Auslassöffnung einen zweiten Querschnitt, wobei der zweite Querschnitt kleiner ist als der erste Querschnitt.

Durch einen entsprechend grossen Querschnitt im Bereich der Einlassöffnung ist sichergestellt, dass ein genügend grosser Zinnvorrat innerhalb der Nut liegt, wobei dieser erste Querschnitt typischerweise abhängig vom zu verzinnenden Kabel gewählt wird. Eine Verengung am zweiten Querschnitt im Bereich der Austrittsöffnung stellt sicher, dass der Zinnvorrat am ungehinderten Ausfliessen gehindert ist. Der zweite, verengte Querschnitt stellt im vorliegenden Fall eine Strömungsblende dar.

Vorzugsweise ist die Kavität oder die Nut im Förderbehälter derart angeordnet, dass sie zumindest in der zweiten Position im Wesentlichen waagerecht ausgebildet ist.

Das ermöglicht das Aufnehmen eines genügend grossen Zinnvorrates sowie das Eintauchen eines Leiterendes in einer waagerechten Position. Ein zusätzliches Verdrehen des Leiterendes ist damit nicht mehr nötig.

In einer bevorzugten Ausführungsform kann die Vorrichtung eine Rakel zum Abstreifen der Oberfläche des Zinnbades aufweisen.

Typischerweise weist ein Zinnbad auf seiner Oberfläche Verunreinigungen und/oder Verschmutzungen auf. Ebenfalls ist ein Zinnbad oxidativen Prozessen ausgesetzt. Um die Oberfläche zu reinigen, kann die Rakel vorgesehen sein. Dies ermöglicht es, dass der Förderbehälter am Ort des Eintauchens des Förderbehälters in das Zinnbad nicht mit Verunreinigungen in Berührung kommt.

Die Rakel kann entlang einer Linearachse verschieblich oder um eine Schwenkachse drehbar angeordnet sein, derart, dass eine Oberfläche des Zinnbades überstreichbar ist.

Durch das Überstreichen der Oberfläche können die Verunreinigungen an der gewünschten Stelle entfernt werden.

Es wäre ebenfalls vorstellbar, dass die Rakel statisch angeordnet ist und sich der Behälter mit dem Zinnbad unterhalb der der Rakel beispielsweise um eine vertikale Drehachse dreht, derart, dass sich das Zinnbad unterhalb der Rakel entlang der Rakel fortbewegt und so die Oberfläche des Zinnbades überstrichen wird. Eine derartige Anordnung würde es ebenfalls ermöglichen, dass Zinnbad zumindest teilweise zu durchmischen.

Zusätzlich oder alternativ kann vorgesehen sein, dass die Vorrichtung eine Vorrichtung zum Durchmischen des Zinnbades aufweist, insbesondere ein Rührwerk. Ein Rührwerk ermöglicht ebenfalls das Durchmischen des Zinnbades. Durch das Durchmischen des Zinnbades kann eine im wesentlichen homogene Verteilung der Bestandteile des Zinnbades erreicht werden.

Wie bereits einleitend dargestellt, wird unter einem Zinnbad nicht nur ein Bad aus reinem Zinn verstanden, sondern ebenfalls Lotlegierungen, wie sie im Stand der Technik zum Verzinnen von Leiterenden gebraucht werden.

Vorzugsweise weist die Vorrichtung eine Heizung auf, die vorzugsweise innerhalb des Behälters oder am Behälter angeordnet ist. Dabei ist es vorstellbar, dass sich die Heizung in eine Wandung des Behälters hinein erstreckt.

Durch die Heizung lässt sich das Zinnbad aufheizen und das Zinn entsprechend verflüssigen. Eine Anordnung innerhalb des Behälters oder am Behälter ermöglicht das einfache Aufheizen des Zinnbades und vermindert Verluste.

Der Förderbehälter ist in Ruheposition im Zinnbad eingetaucht und wird direkt durch das Zinnbad geheizt. Der Förderbehälter hat keine eigene Heizung und bleibt deshalb wann immer möglich im Zinnbad eingetaucht. Dies stellt sicher, dass sich der Förderbehälter nicht verschmutzt und dass dieser auf der nötigen Temperatur bleibt.

Die Vorrichtung kann einen Greifer zum Greifen eines Kabels und/oder eines Leiterendes aufweisen. Der Greifer weist vorzugsweise zwei Klemmbacken auf und ist insbesondere beweglich angeordnet, derart, dass er in zumindest eine erste Position und eine zweite, zu der ersten Position unterschiedliche, Position bringbar ist.

Dies ermöglicht das Bereitstellen eines Kabels oder eines Leiterendes in einer entsprechenden Position, die es ermöglicht, dass Leiterende zu verzinnen.

Vorzugsweise befindet sich die erste Position relativ zur Position des Förderbehälters in der zweiten Position in einer Lage, in der es zum Verzinnen des Leiterendes lediglich noch notwendig ist, den Leiter entlang seiner Längsachse zu verschieben. Durch das Verschieben der Greifer von der ersten Position in eine zu dieser Position unterschiedliche Position wird der Leiter vorzugsweise entlang seiner Längsachse in den Förderbehälter, beziehungsweise in eine Kavität oder eine Nut des Förderbehälters hinein bewegt und entsprechend in einen sich im Förderbehälter befindlichen Zinnvorrat eingetaucht.

Es kann vorgesehen sein, dass die Vorrichtung mehrere Förderbehälter aufweist. Dadurch ist es ermöglicht, dass mehrere Leiterenden gleichzeitig verzinnt werden.

Die Förderbehälter sind dabei vorzugsweise nebeneinander angeordnet und in einer bevorzugten Ausführungsform individuell in je eine erste Position und in je eine zweite, zu der jeweiligen ersten Position unterschiedliche, Position bringbar sind. Dies ermöglicht beispielsweise das serielle Verzinnen von mehreren einzelnen Leiterenden.

Die Vorrichtung kann insbesondere je Förderbehälter eine Reinigungsvorrichtung aufweisen. Die Reinigungsvorrichtung ist vorzugsweise als Bürste ausgebildet. Durch eine, sich direkt an oder bei der Vorrichtung befindliche Reinigungsvorrichtung ist eine einfache Reinigung des Förderbehälters ermöglicht.

Die Reinigungsvorrichtung kann sich sowohl innerhalb als auch ausserhalb des Behälters befinden und sowohl innerhalb als auch ausserhalb des Zinnbades angeordnet sein.

Dabei wäre es beispielsweise vorstellbar, dass der Förderbehälter nach einer bestimmten Anzahl Verzinnvorgänge in eine weitere Position gefahren wird, in der mit der Reinigungsvorrichtung die Kavität und/oder die Nut gereinigt wird.

Es wäre ebenfalls vorstellbar, dass anstelle eines Leiterendes die Reinigungsvorrichtung mit den Greifern gehalten wird und anstelle eines Verzinnvorganges ein Reinigungsvorgang durchgeführt wird.

Ein weiterer Aspekt der Erfindung betrifft ein Verfahren zum Verzinnen von Leiterenden, insbesondere ausgeführt mit einer wie vorliegend beschriebenen Vorrichtung. Das Verfahren umfasst die Schritte
- Aufheizen eines Zinnbades in einem Behälter
- Eintauchen eines Förderbehälters in das Zinnbad, insbesondere zum Bereitstellen eines Zinnvorrates am Förderbehälter, wobei das Bereitstellen des Zinnvorrates vorzugsweise durch ein Befüllen einer Kavität oder einer Nut mit Zinn erfolgt
- Bereitstellen eines zu verzinnenden Leiterendes
- Entnehmen des Förderbehälters aus dem Zinnbad
- Eintauchen des Leiterendes in einen Zinnvorrat im Förderbehälter.

Dabei entspricht die eingetauchte Position des Förderbehälters der wie vorliegend beschriebenen ersten Position des Förderbehälters und die Position, die der Förderbehälter nach dem Entnehmen des Förderbehälters aus dem Zinnbad einnimmt, der wie vorliegend beschriebenen zweiten, zur ersten Position unterschiedlichen, Position.

Das wie vorliegend beschriebene Verfahren ermöglicht es, ein Leiterende und/oder Kabelende zu verzinnen, ohne dass dieses in ein Zinnbad eingetaucht werden muss.

Vorzugsweise wird im Anschluss das Leiterende wieder aus dem Zinnvorrat entnommen und der Förderbehälter zurück in das Zinnbad eingetaucht.

Damit steht der Förderbehälter für einen nächsten Verzinnvorgang wieder zur Verfügung. Diese Schritte können beliebig wiederholt werden.

Vorzugsweise wird der Förderbehälter vertikal in das Zinnbad eingetaucht.

Das vertikale Eintauchen ermöglicht eine einfache Ausbildung der Vorrichtung, mit der dieses Verfahren ausgeführt wird.

Es wäre ebenfalls möglich, den Förderbehälter mittels einer Schwenkbewegung in das Zinnbad einzutauchen.

Das Eintauchen in das Zinnbad mittels einer Schwenkbewegung ermöglicht es, den Förderbehälter in einer zur Verzinnposition unterschiedlichen Ausrichtung einzutauchen. Eine sich am Förderbehälter befindliche Kavität oder Nut weist somit eine zu einer Lage in der Verzinnposition verdrehte Lage auf. Je nach Verdrehung ist das Befüllen der Kavität oder der Nut vereinfacht.

Vorzugsweise wird bei der Entnahme des Förderbehälters aus dem Zinnbad dieser so ausgerichtet, dass eine sich am Förderbehälter befindliche Kavität oder Nut sich im Wesentlichen waagerecht erstreckt.

Die waagerechte Erstreckung ermöglicht es, ein zu verzinnendes Leiterende ebenfalls im Wesentlichen waagerecht in die Kavität/Nut einzutauchen und macht ein vorgängiges Verdrehen oder Verschwenken des Leiterendes überflüssig.

Nach dem Eintauchen des Förderbehälters verbleibt dieser vorzugsweise so lange innerhalb des Zinnbades, bis dieser im Wesentlichen die gleiche Temperatur wie das Zinnbad angenommen hat.

Durch die entsprechende Temperatur des Förderbehälters ist sichergestellt, dass der Zinnvorrat, der sich nach der Entnahme am Förderbehälter befindet, ebenfalls die gleiche Temperatur aufweist und somit flüssig bleibt.

Vorzugsweise weist das Verfahren den Schritt auf, dass das Leiterende vor dem Eintauchen in den Zinnvorrat mit einem Flussmittel benetzt wird. Das Flussmittel kann vor dem Eintauchen des Leiterendes in den Zinnvorrat durch Hitze aktiviert werden.

Das vorgängige Aufbringen von Flussmittel verbessert die Verbindung des Zinns mit dem Leiter. Je nach Flussmittel verbessert die Aktivierung durch Hitze die entsprechenden Eigenschaften.

Es kann vorgesehen sein, dass zum Aktivieren des Flussmittels die Abwärme des Zinnbades genutzt wird. Eine separate Vorrichtung zum Aktivieren des Flussmittels entfällt.

Es kann vorgesehen sein, dass vor dem Entnehmen des Förderbehälters aus dem Zinnbad die Oberfläche des Zinnbades mit einer Rakel gereinigt wird.

Dies ermöglicht das Entfernen von Verunreinigungen und Schmutz und stellt sicher, dass der Zinnvorrat im Förderbehälter möglichst frei von Verunreinigungen ist.

Das zu verzinnende Leiterende kann mittels eines Greifers mit vorzugsweise zwei Klemmbacken in einer ersten Position bereitgestellt werden und ist in eine zweite, zu der ersten Position unterschiedliche, Position bringbar.

Durch das Bereitstellen des Leiterendes in einer ersten Position ist es ermöglicht, dass Leiterende in den Einflussbereich/in die Nähe des Förderbehälters zu bringen und durch das Bewegen des Leiterendes in die zweite Position das Leiterende in eine Kavität oder eine Nut des Förderbehälters einzutauchen.

Es kann vorgesehen sein, eine Oberfläche des Zinnbades mit einer Schutzgasschicht zu schützen, das heisst, beispielsweise kontinuierlich oder getaktet ein Schutzgas auf die Oberfläche des Zinnbades aufzubringen.

Dazu kann eine Begasungsanlage vorgesehen sein.

Durch die Schutzgasschicht ist eine Reaktion mit beispielsweise Sauerstoff, der sich in der Atmosphäre befindet, verhindert und eine entsprechende Oxidation der Oberfläche des Zinnbades ist ebenfalls verhindert.

Ebenfalls kann vorgesehen sein, dass Zinnbad taktweise oder kontinuierlich mit einer Vorrichtung zum Durchmischen des Zinnbades zu durchmischen. Die Durchmischung kann dabei insbesondere durch ein Bewegen des Förderbehälters und/oder des Behälters erfolgen.

Durch die Durchmischung des Zinnbades ist sichergestellt, dass die Bestandteile des Zinnbades im Wesentlichen homogen verteilt sind.

Anhand von Figuren, welche lediglich Ausführungsbeispiele darstellen, wird die Erfindung im Folgenden näher erläutert. Es zeigen:
- Figur 1:: Eine perspektivische Ansicht einer Vorrichtung zum Verzinnen von Kabelenden;
- Figur 2:: Eine Draufsicht auf die Vorrichtung aus der Figur 1;
- Figur 3:: Eine Schnittansicht gemäss dem Schnitt A - A aus der Figur 2;
- Figur 4:: Eine Schnittansicht gemäss dem Schnitt B-B aus der Figur 2;
- Figur 5:: Die Detailansicht X gemäss der Figur 4.

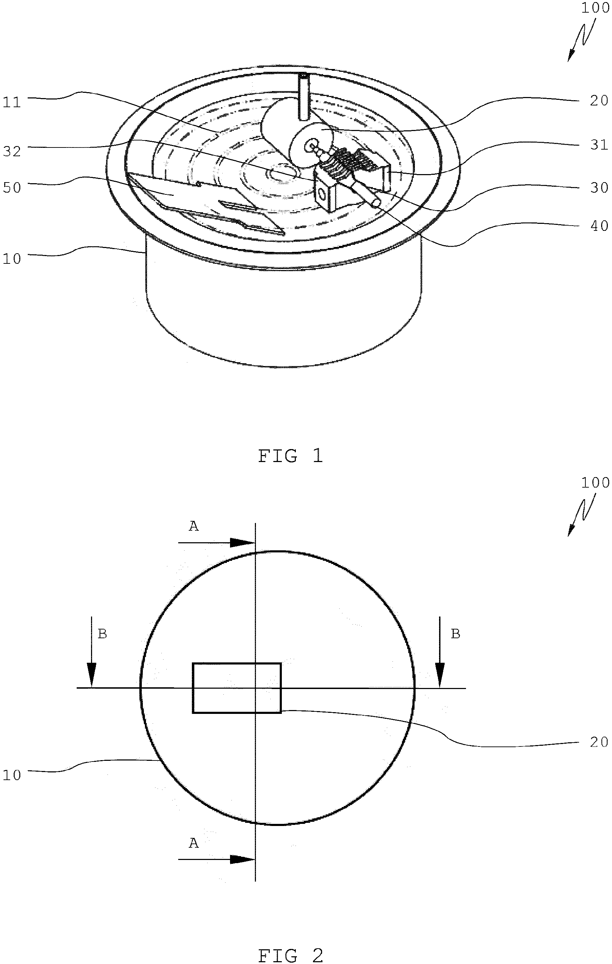

Die Figur 1 zeigt eine perspektivische Ansicht einer Vorrichtung 100 zum Verzinnen von Kabelenden. Die Vorrichtung 100 weist einen Behälter 10 auf, in welchem ein Zinnbad 11 ist. Oberhalb des Zinnbades 11 ist ein Förderbehälter 20 angeordnet, in den das Leiterende eines Kabels 40 eingetaucht ist. Das Kabel 40 ist durch einen Greifer 30, umfassend zwei Klemmbacken 31, 32, gehalten. Der Greifer 30 ist mit einer hier nicht dargestellten Haltevorrichtung an der Vorrichtung 100 angeordnet. Ebenfalls an der Vorrichtung 100 angeordnet ist eine Rakel 50, welche die Oberfläche des Zinnbades 11 überstreicht. Die Lage, in der sich der Förderbehälter 20 in der Figur 1 befindet, entspricht der zweiten Position.

Die Figur 2 zeigt eine Draufsicht auf die Vorrichtung 100 aus der Figur 1. Die Vorrichtung 100 ist lediglich schematisch dargestellt. Sichtbar ist der Behälter 10 sowie der darin angeordnete Förderbehälter 20. In der Figur 2 sind zwei Schnitte eingezeichnet, Schnitt A-A der quer zur Fördererrichtung eingezeichnet ist und Schnitt B-B, der entlang der Fördererrichtung eingezeichnet ist.

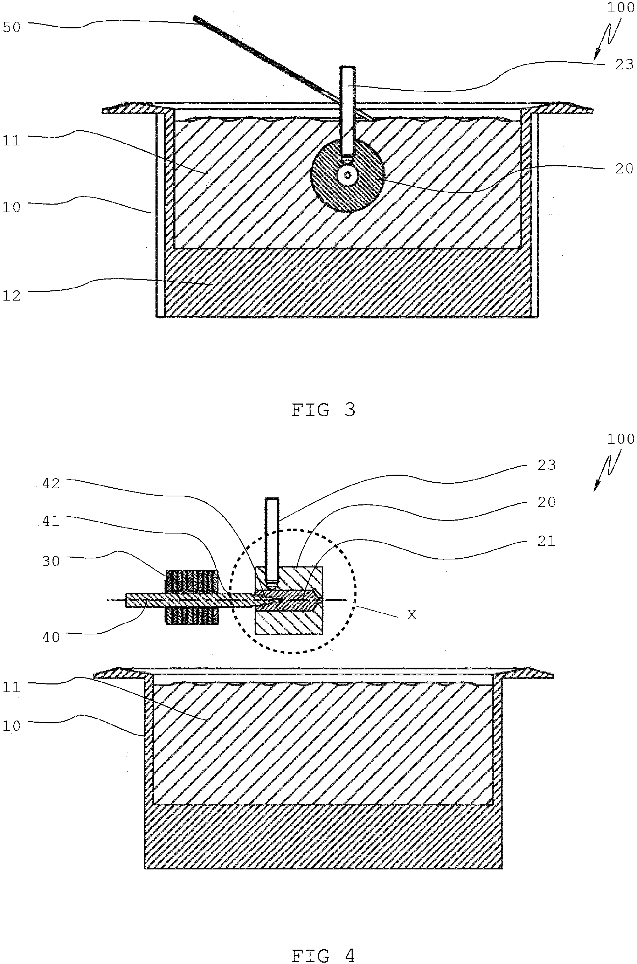

Die Figur 3 zeigt die Schnittansicht entlang des Schnittes A-A aus der Figur 2. Die Figur 3 zeigt den Behälter 10. Im Boden des Behälters 10 ist eine nicht näher dargestellte Heizung 12 angeordnet, welche das sich im Behälter 10 befindliche Zinn aufheizt, bis ein Zinnbad 11 entsteht. Im Zinnbad 11 eingetaucht ist der Förderbehälter 20 der an einer Haltevorrichtung 23 befestigt ist. Die Oberfläche des Zinnbades 11 ist mit einer Rakel 50 überstrichen.

Die Figur 4 zeigt den Querschnitt B-B aus der Figur 2, wobei sich der Förderbehälter 20 in der zweiten Position oberhalb des Zinnbades 11 befindet. Dazu wurde der Förderbehälter 20 mit der Haltevorrichtung 23 aus der Position innerhalb des Behälters 10 (siehe Figur 3) in die vorliegend gezeigte Position geschwenkt. Der Förderbehälter 20 weist eine Kavität 21 auf, in die das Ende eines Leiters 42 eingeführt ist. Der Leiter 42 ist durch eine Kabelummantelung 41 geschützt. Beide zusammen bilden ein Kabel 40, dass durch den Greifer 30 gehalten ist. Der Greifer 30 befindet sich vorliegend ebenfalls in seiner zweiten Position.

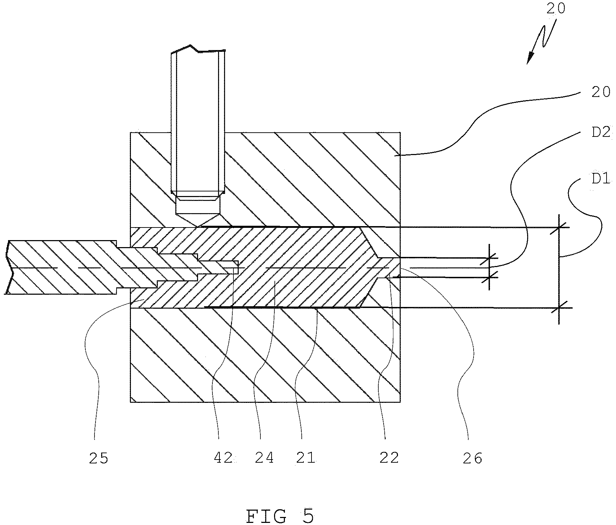

Die Figur 5 zeigt die Detailansicht X der Figur 4. Gezeigt ist der Förderbehälter 20 mit seiner Kavität 21. Die Kavität 21 ist vorliegend als Bohrung mit einem ersten Durchmesser ausgebildet, die sich nahezu durch den ganzen Förderbehälter 20 erstreckt. Die Kavität weist einen ersten Querschnitt D1 auf und einen zweiten Querschnitt D2. Die Kavität 21 durchbricht den Förderbehälter 20 an der Austrittsöffnung 26 mit dem Durchmesser D2. Das heisst, die Kavität 21 erstreckt sich durch den ganzen Förderbehälter 20. In die Kavität 21 hinein erstreckt sich ein Leiter 42 durch die Einlassöffnung 25. Die Kavität 21 ist vorliegend mit einem Zinnvorrat 24 gefüllt, der durch eintauchen in den Behälter 10 (siehe Figur 3) gefüllt wurde. Durch das Eintauchen des Leiterendes des Leiters 42 in die Kavität 21 wurde ein Teil des Zinnvorrates 24 verdrängt. Dieser kann vorliegend durch die Einlassöffnung 25 oder durch die Auslassöffnung 26 fliessen.

### Bezugszeichenliste

- 100: Vorrichtung
- 10: Behälter
- 11: Zinnbad
- 12: Heizung
- 20: Förderbehälter
- 21: Bohrung
- 22: verengter Querschnitt
- 23: Halteelement
- 24: Zinnvorrat
- 25: Einlassöffnung
- 26: Auslassöffnung
- 30: Greifer
- 31: Klemmbacken
- 32: Klemmbacken
- 40: Kabel
- 41: Kabelummantelung
- 42: Leiter
- 50: Rakel

- D1: Durchmesser 1
- D2: Durchmesser 2

## Patentansprüche

1. Vorrichtung (100) zum Verzinnen von Leiterenden, umfassend einen Behälter (10) zum Bereitstellen eines Zinnbades (11) und einen Förderbehälter (20) zur Aufnahme eines Zinnvorrates (24),
**dadurch gekennzeichnet, dass**
der Förderbehälter (20), insbesondere mit einer Haltevorrichtung an der Vorrichtung (100), beweglich angeordnet ist, derart, dass er in zumindest eine erste Position innerhalb des Behälters (10) und in eine zweite, zu der ersten Position unterschiedliche, Position bringbar ist.

2. Vorrichtung (100) nach Anspruch 1,
**dadurch gekennzeichnet, dass**
der Förderbehälter (20) vertikal verschieblich angeordnet ist, oder dass der Förderbehälter (20) um eine Drehachse schwenkbar angeordnet ist.

3. Vorrichtung (100) nach einem der Ansprüche 1 oder 2,
**dadurch gekennzeichnet, dass**
der Förderbehälter (20) zur Aufnahme des Zinnvorrates (24) eine Kavität (21) mit einer Einlassöffnung (25) aufweist, wobei sich diese Kavität (21) insbesondere durch den Förderbehälter (20) hindurch erstreckt und eine Auslassöffnung (26) aufweist, und vorzugsweise im Bereich der Einlassöffnung (25) einen ersten Querschnitt (D1) und im Bereich der Auslassöffnung (26) einen zweiten Querschnitt (D2) aufweist.

4. Vorrichtung (100) nach einem der Ansprüche 1 oder 2,
**dadurch gekennzeichnet, dass**
der Förderbehälter (20) zur Aufnahme des Zinnvorrates (24) eine Nut (26) mit einer Einlassöffnung (25) aufweist, wobei sich diese Nut (26) insbesondere entlang des ganzen Förderbehälters (20) erstreckt und eine Auslassöffnung (26) aufweist, und vorzugsweise im Bereich der Einlassöffnung (25) einen ersten Querschnitt (D1) und im Bereich der Auslassöffnung (26) einen zweiten Querschnitt (D2) aufweist.

5. Vorrichtung (100) nach Anspruch 3 oder 4,
**dadurch gekennzeichnet, dass**
die Kavität (21) oder die Nut (26) im Förderbehälter (20) derart angeordnet ist, dass sie zumindest in der zweiten Position im Wesentlichen waagrecht ausgebildet ist.

6. Vorrichtung (100) nach einem der Ansprüche 1 bis 5,
**dadurch gekennzeichnet, dass**
die Vorrichtung (100) eine Rakel (50) zum Abstreifen der Oberfläche des Zinnbades (11) aufweist.

7. Vorrichtung (100) nach Anspruch 6,
**dadurch gekennzeichnet, dass**
die Rakel (50) entlang einer Linearachse verschieblich oder um eine Schwenkachse drehbar angeordnet ist, derart, dass eine Oberfläche des Zinnbades überstreichbar ist.

8. Vorrichtung (100) nach einem der Ansprüche 1 bis 7,
**dadurch gekennzeichnet, dass**
die Vorrichtung (100) eine Heizung (12) aufweist, die vorzugsweise innerhalb des Behälters (10) oder am Behälter angeordnet ist.

9. Vorrichtung (100) nach einem der Ansprüche 1 bis 8,
**dadurch gekennzeichnet, dass**
die Vorrichtung (100) einen Greifer (30) zum Greifen eines Kabels (40) aufweist, wobei der Greifer (30) vorzugsweise zwei Klemmbacken (31, 32) aufweist, und insbesondere der Greifer (30) beweglich angeordnet ist, derart, dass er in zumindest eine erste Position und in eine zweite, zu der ersten Position unterschiedliche, Position bringbar ist.

10. Verfahren zum Verzinnen von Leiterenden, insbesondere ausgeführt mit einer Vorrichtung nach einem der Ansprüche 1 bis 9, umfassend die Schritte
- Aufheizen eines Zinnbades (11) in einem Behälter (10)
- Eintauchen eines Förderbehälters (20) in das Zinnbad (11)
- Bereitstellen eines zu verzinnenden Leiterendes
- Entnehmen des Förderbehälters (20) aus dem Zinnbad (11)
- Eintauchen des Leiterendes in einen Zinnvorrat (24) im Förderbehälter (20).

11. Verfahren nach Anspruch 10, **dadurch gekennzeichnet, dass** der Förderbehälter (20) vertikal in das Zinnbad (11) eingetaucht wird, oder dass der Förderbehälter (20) mittels einer Schwenkbewegung in das Zinnbad (11) eingetaucht wird.

12. Verfahren nach einem der Ansprüche 10 bis 11,
**dadurch gekennzeichnet, dass**
der Förderbehälter (20) nach dem Eintauchen in das Zinnbad (11) solange in dieser Position verbleibt, bis er im Wesentlichen die gleiche Temperatur wie das Zinnbad (11) angenommen hat.

13. Verfahren nach einem der Ansprüche 10 bis 12,
**dadurch gekennzeichnet, dass**
das Leiterende vor dem Eintauchen in den Zinnvorrat (24) mit einem Flussmittel benetzt wird, wobei vorzugsweise vor dem Eintauchen des Leiterendes in den Zinnvorrat (24) das Flussmittel durch Hitze aktiviert wird.

14. Verfahren nach einem der Ansprüche 10 bis 13,
**dadurch gekennzeichnet, dass**
vor dem Entnehmen des Förderbehälters (20) aus dem Zinnbad (11) die Oberfläche des Zinnbades (11) mit einer Rakel (50) gereinigt wird.

15. Verfahren nach einem der Ansprüche 10 bis 14,
**dadurch gekennzeichnet, dass**
das zu verzinnende Leiterende mittels eines Greifers (30) mit vorzugsweise zwei Klemmbacken (31, 32) in einer ersten Position bereitgestellt wird und in eine zweite, zu der ersten Position unterschiedliche, Position bringbar ist.
